(19) **Europäisches Patentamt / European Patent Office / Office européen des brevets**

(11) **EP 4 199 522 B1**

(12) **EUROPEAN PATENT SPECIFICATION**

(45) Date of publication and mention
of the grant of the patent:
**30.04.2025 Bulletin 2025/18**

(21) Application number: **21306847.1**

(22) Date of filing: **20.12.2021**

(51) International Patent Classification (IPC):
***H04N 21/236*** (2011.01)  ***H04N 21/434*** (2011.01)
***H04N 21/81*** (2011.01)  ***H04N 21/854*** (2011.01)

(52) Cooperative Patent Classification (CPC):
**H04N 21/816; H04N 21/236; H04N 21/434;
H04N 21/85406**

(54) **METHOD AND APPARATUS OF ENCAPSULATING/PARSING POINT CLOUD DATA IN/FROM
ENCAPSULATING CONTAINERS**

VERFAHREN UND VORRICHTUNG ZUM EINKAPSELN/PARSEN VON PUNKTWOLKENDATEN IN/
AUS EINEM EINKAPSELUNGSBEHÄLTER

PROCÉDÉ ET APPAREIL D'ENCAPSULATION/D'ANALYSE DE DONNÉES DE NUAGE DE POINTS
DANS/À PARTIR DE RÉCIPIENTS D'ENCAPSULATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.06.2023 Bulletin 2023/25**

(73) Proprietor: **Beijing Xiaomi Mobile Software Co.,
Ltd.
Beijing 100000 (CN)**

(72) Inventor: **THOMAS, Emmanuel
Beijing (CN)**

(74) Representative: **RVDB Rennes
44 rue Lariboisière
35235 Thorigné-Fouillard (FR)**

(56) References cited:
**US-A1- 2019 227 545    US-A1- 2020 355 820
US-A1- 2021 010 814    US-A1- 2021 227 232**

Processed by Luminess, 75001 PARIS (FR)

## Description

FIELD

The present application generally relates to numerical data compression and, in particular to methods and apparatus of encapsulating/parsing point cloud in encapsulating containers.

BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

As a format for the representation of 3D data, point clouds have recently gained traction as they are versatile in their capability in representing all types of physical objects or scenes. Point clouds may be used for various purposes such as culture heritage/buildings in which objects like statues or buildings are scanned in 3D in order to share the spatial configuration of the object without sending or visiting it. Also, it is a way to ensure preserving the knowledge of the object in case it may be destroyed; for instance, a temple by an earthquake. Such point clouds are typically static, colored and huge.

Another use case is in topography and cartography in which using 3D representations allow for maps that are not limited to the plane and may include the relief. Google Maps is now a good example of 3D maps but uses meshes instead of point clouds. Nevertheless, point clouds may be a suitable data format for 3D maps and such point clouds are typically static, colored and huge.

Virtual Reality (VR), Augmented Reality (AR) and immersive worlds have recently become a hot topic and are foreseen by many as the future of 2D flat video. The basic idea is to immerse the viewer in a surrounding environment, in contrast to a standard TV that only allows the viewer to look at the virtual world in front of him/her. There are several gradations in the immersivity depending on the freedom of the viewer in the environment. A point cloud is a good format candidate for distributing VR/AR worlds.

The automotive industry, and more particularly foreseen autonomous cars, are also domains in which point clouds may be intensively used. Autonomous cars should be able to "probe" their environment to make good driving decisions based on the detected presence and nature of their immediate nearby objects and road configuration.

Depending on the use cases, points clouds may have from thousands to up to billions of points for cartography applications. Raw representations of point clouds require a very high number of bits per point, with at least a dozen of bits per cartesian coordinate x, y or z, and optionally more bits for the attribute(s), for instance three times 10 bits for the colors.

It is important in many applications to be able to either distribute point clouds to an end-user or store them in a server by consuming only a reasonable amount of bitrate or storage space, while maintaining an acceptable (or preferably very good) quality of experience. Efficient compression of these point clouds is a key point in order to make the distribution chain of many immersive worlds practical.

Compression may be lossy (like in video compression) for the distribution to and visualization by an end-user, for example on AR/VR glasses or any other 3D-capable device. Other use cases do require lossless compression, like medical applications or autonomous driving, to avoid altering the results of a decision obtained from the subsequent analysis of the compressed and transmitted point cloud.

Until recently, point cloud compression (aka PCC) was not addressed by the mass market and no standardized point cloud codec was available. In 2017, the standardization working group ISO/JCT1/SC29/WG11, aka Moving Picture Experts Group or MPEG, has initiated work items on point cloud compression. This has led to two standards, namely

- MPEG-I part 5 (ISO/IEC 23090-5) or Video-based Point Cloud Compression (aka V-PCC)

- MPEG-I part 9 (ISO/IEC 23090-9) or Geometry-based Point Cloud Compression (aka G-PCC)

Both V-PCC and G-PCC standards have finalized their first version in late 2020 and will soon be available to the market.

The V-PCC coding method compresses a point cloud by performing multiple projections of a 3D object to obtain 2D patches that are packed into an image (or a video when dealing with moving point clouds). Obtained images or videos are then compressed using already existing image/video codecs, allowing for the leverage of already deployed image and video solutions. By its very nature, V-PCC is efficient only on dense and continuous point clouds because image/video codecs are unable to compress non-smooth patches as would be obtained from the projection of, for example, spinning Lidar-sensed sparse geometry data.

The G-PCC coding method has two schemes for the compression of the geometry.

The first scheme is based on an occupancy tree (octree/quadtree/binary tree) representation of the point cloud geometry. Occupied nodes are split down until a certain size is reached, and occupied leaf nodes provide the location of points, typically at the center of these nodes. By using neighbor-based prediction techniques, high level of compression can be obtained for dense point clouds. Sparse point clouds are also addressed by directly coding the position of point within a node with non-minimal size, by stopping the tree construction when only isolated points are present in a node; this technique is known as Direct Coding Mode (DCM).

The second scheme is based on a predictive tree, each node representing the 3D location of one point and the relation between nodes is spatial prediction from parent to children. This method can only address sparse point clouds and offers the advantage of lower latency and simpler decoding than the occupancy tree. However, compression performance is only marginally better, and the encoding is complex, relatively to the first occupancy-based method, intensively looking for the best predictor (among a long list of potential predictors) when constructing the predictive tree.

In both schemes, attribute (de)coding is performed after complete geometry (de)coding, leading to a two-pass coding. Thus, low latency is obtained by using slices that decompose the 3D space into sub-volumes that are coded independently, without prediction between the sub-volumes. This may heavily impact the compression performance when many slices are used.

An important use case is the transmission of sparse geometry data sensed by at least one sensor mounted on a moving vehicle. This usually requires a simple and low latency embarked encoder. Simplicity is required because the encoder is likely to be deployed on computing units which perform other processing in parallel, such as (semi-) autonomous driving, thus limiting the processing power available to the point cloud encoder. Low latency is also required to allow for fast transmission from the car to a cloud in order to have a real-time view of the local traffic, based on multiple-vehicle acquisition, and take adequate fast decision based on the traffic information. While transmission latency can be low enough by using 5G, the encoder itself shall not introduce too much latency due to coding. Also, compression performance is extremely important since the flow of data from millions of cars to the cloud is expected to be extremely heavy.

Specific priors related to spinning Lidar-sensed sparse geometry data have been already exploited in G-PCC and have led to very significant gains of compression.

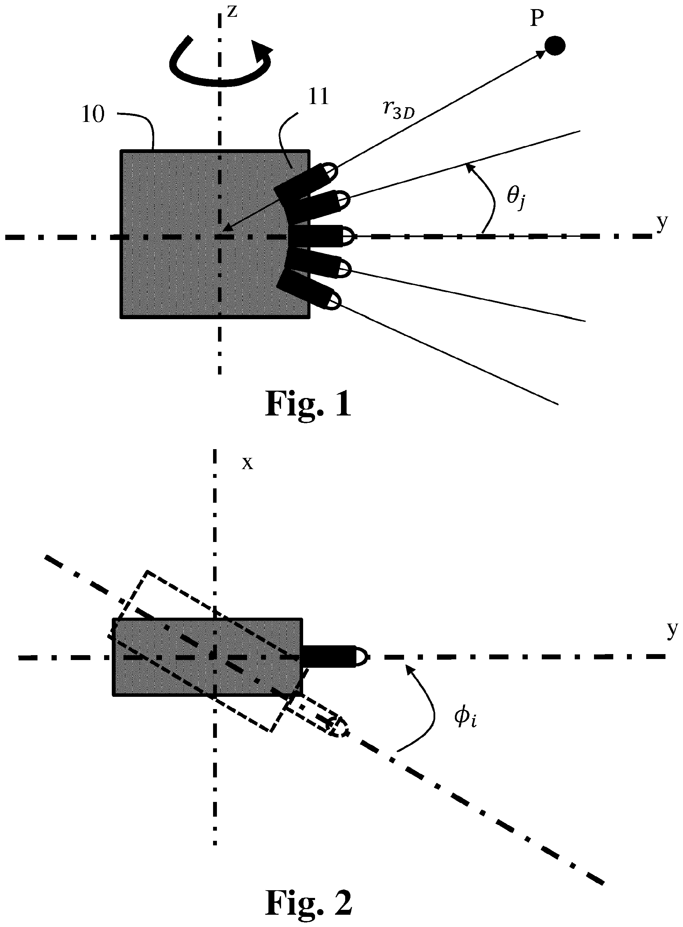

First, G-PCC exploits the elevation angle (relative to the horizontal ground) of sensing from a spinning Lidar head 10 as depicted on **Figures 1** and **2**. A Lidar head 10 comprises a set of sensors 11 (for example lasers), here five sensors are represented. The spinning Lidar head 10 may spin around a vertical axis **z** to sense geometry data of a physical object. Lidar-sensed geometry data is then represented in spherical coordinates $(r_{3D}, \phi, \theta)$, where $r_{3D}$ is the distance of a point P from the Lidar head's center, $\phi$ is an azimuthal angle of the Lidar head's spin relative to a referential, and $\theta$ is an elevation angle of a sensor **k** of the spinning Lidar head 10 relative to a horizontal referential plane.

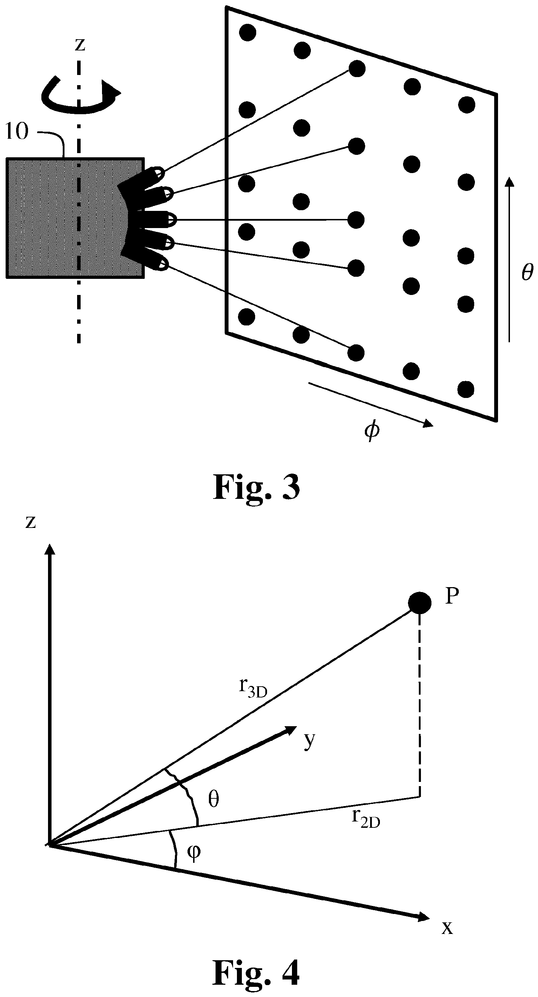

A regular distribution along the azimuthal angle has been observed on Lidar-sensed data as depicted on **Figure 3**. This regularity is used in G-PCC to obtain a quasi 1D representation of the point cloud where, up to noise, only a radius $r_{3D}$ belongs to a continuous range of values while the angles $\phi$ and $\theta$ take only a discrete number of values $\phi_i$ $\forall i = 0$ to $I - 1$ where $I$ is a number of azimuthal angles used for the sensing of the points and $\theta_j$ $\forall j = 0$ to $J - 1$ where $J$ is a number of sensors of the spinning Lidar head 10. Basically, G-PCC represents Lidar-sensed sparse geometry data on a two-dimensional (discrete) angular coordinate space $(\phi, \theta)$ as depicted on **Figure 3**, together with a radius value $r_{3D}$ for each point.

This quasi 1D property has been exploited in G-PCC by predicting, in the spherical coordinate space, the location of a current point based on a precedingly coded point by using the discrete nature of angles.

More precisely, the direct locations of points within a node are entropy encoded by using a context-adaptive entropy coder. Contexts are then obtained from the local conversion of the point locations into angular coordinates $(\phi, \theta)$ and from the location of these angular coordinates relative to discrete angular coordinates $(\phi_i, \theta_j)$ obtained from precedingly coded points. The predictive tree directly codes a first version of a point location in the angular coordinates $(r_{2D}, \phi, \theta)$, where $r_{2D}$ is the projected radius on the horizontal xy plane as depicted on **Figure 4**, using the quasi 1D nature $(r_{2D}, \phi_i, \theta_j)$ of this angular coordinate space. Then, spherical coordinates $(r_{2D}, \phi, \theta)$ are converted into 3D cartesian coordinates (x,y,z) and a xyz residual is coded to tackle the errors of coordinate conversion, the approximation of elevation and azimuthal angles and potential noise.

Sensing sparse geometry data of point cloud by using spinning sensors head has some drawbacks and other types of sensor head may be used.

The mechanical parts generating the spin (rotation) of a spinning sensors head are prone to breakage and are costly. Also, by construction, the angle of view is necessarily $2\pi$. This does not allow to sense a particular region of interest with high frequency, for instance it may be more interesting to sense in front of a vehicle than behind. Practically in most cases, when a sensor is attached to a vehicle, most of the $2\pi$ angle of view is screened by the vehicle itself and the screened angle of view does not need to be sensed.

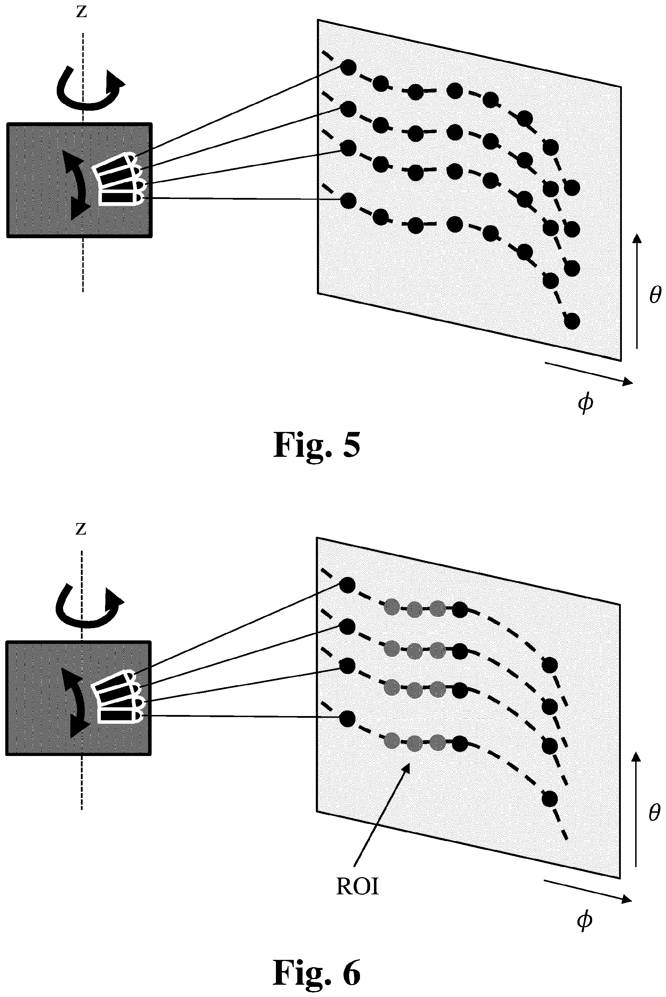

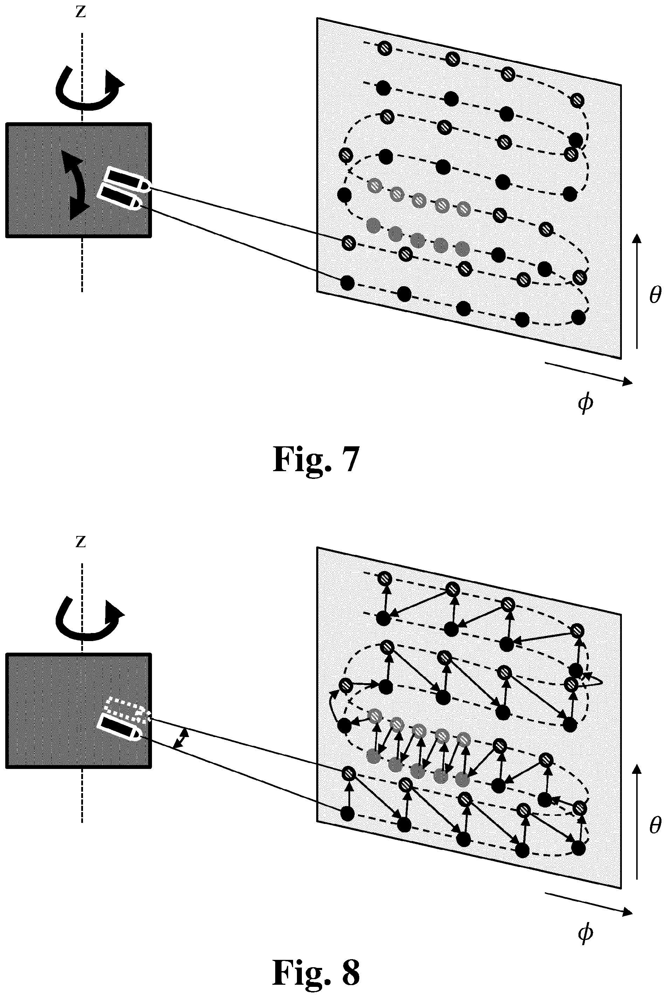

New types of sensors, namely parametric sensors, have emerged recently, allowing for a more flexible selection of the region to be sensed. In most recent designs, a sensor can be more freely and electronically (thus avoiding fragile mechanical parts) moved to obtain a large variety of sensing path in the 3D scene as depicted on **Figure 5**. On **Figure 5**, a set of four sensors is shown. Their relative sensing directions, i.e. azimuthal and elevation angles, are fixed relative to each other, however they overall sense a scene following a programmable sensing path depicted by dashed lines on the two-dimensional angular coordinate $(\phi, \theta)$ space. Points of the point cloud may then be sensed regularly along the sensing path. Some sensor head may also adapt their sensing frequency by increasing their sensing frequency when a region of interest ROI has been detected as illustrated on **Figure 6**. Such a region of interest ROI may be associated with a close object, a moving object, or any object (pedestrian, other vehicle, etc.) precedingly segmented, for instance in a previous frame, or dynamically segmented during the sensing. **Figure 7** shows schematically another example of a sensing path (typical zigzag sensing path) used by a sensor head comprising two sensors able to increase their sensing frequencies when a region of interest has been detected (grey shaded points and grey hashed points). Using a zigzag sensing path may be advantageously used to sense a limited (azimuthal) angular sector of a 3D scene. Because sensors may be attached to a vehicle, their viewports of interest are necessarily limited by the presence of the vehicle itself that obstructs the scene, unless the sensors are located at the top of the car. Consequently, sensors with a limited probing angular sector are of high interest and easier to integrate to a vehicle.

As depicted on **Figure 8**, a sensor head comprising a single sensor may also be used to sense multiple positions (two vertical positions on **Figure 8**), for instance using reflections on mirrors oscillating with rotations (here vertical rotations). In that case, instead of using a set of sensors, a single sensor at different angular positions (i.e. with different elevation angle on **Figure 8**) along a sensing path (here a zigzag sensing path) is used mimicking a sensing using a set of multiple sensors.

For the sake of simplicity, in the following descriptions and claims, the "sensor head" may refer to a set of physical sensors or a set of sensing elevation indexes mimicking a set of sensors as well. Also, one skilled in the art will understand that "a sensor" could also refer to a sensor in each sensing elevation index position.

In the working group ISO/IEC JTC 1/SC 29/WG 7 on MPEG 3D Graphics Coding, a codec named L3C2 (Low-Latency Low-Complexity Codec) is being considered to improve, relative to the G-PCC codec, the coding efficiency of Lidar-sensed point clouds. The codec L3C2 provides an example of a two-dimensional representation of the points of a point cloud namely a coarse representation. A description of the code can be found in the output document of the Working Group in N00167, ISO/IEC JTC 1/SC 29/WG 7, MPEG 3D Graphics Coding, "Technologies under Consideration in G-PCC", August 31st 2021.

Basically, for each sensed point $P_n$ of the point cloud, a sensor index $\lambda_n$ associated with a sensor that sensed the point $P_n$ and an azimuthal angle $\phi_n$ representing a sense angle of said sensor are obtained by converting 3D cartesian coordinates $(x_n, y_n, z_n)$ representing the 3D location of the sensed point $P_n$. Points of the point cloud are then ordered based on the azimuthal angles $\phi_n$ and the sensor indices $\lambda_n$, for example, according to a lexicographic order based first on the azimuthal angle and then on the sensor index. The order index $o(P_n)$ of a point $P_n$ is then obtained by:

$$o(P_n) = \phi_n {}^* \mathrm{K} + \lambda_n$$

where K is the number of sensors.

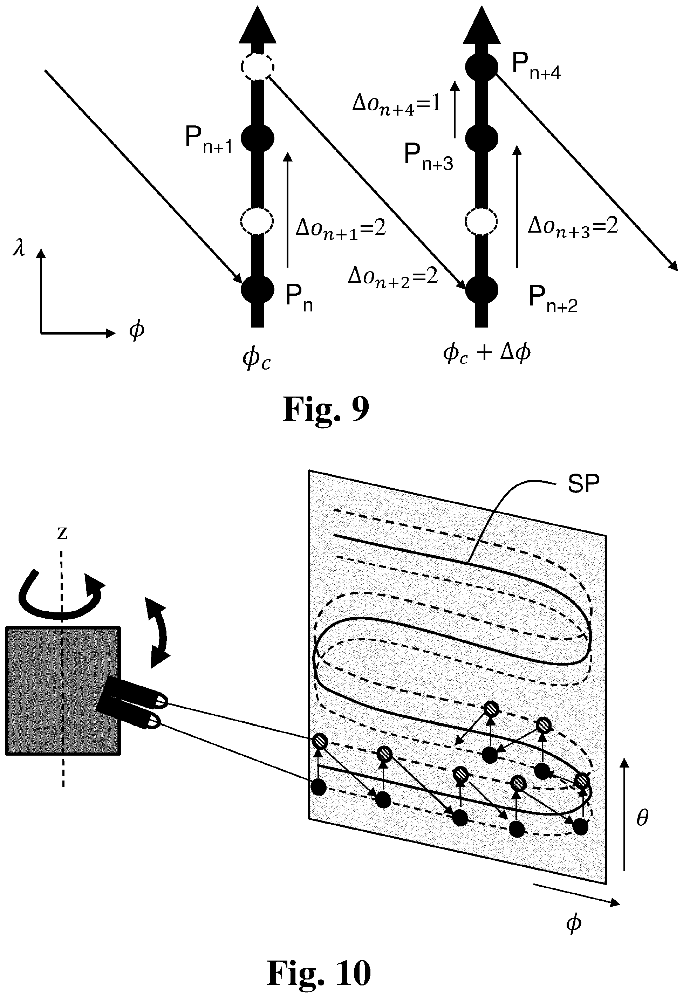

**Figure 9** shows schematically ordered coarse points of a coarse representation in accordance with at least one exemplary embodiment.

Five points of the point cloud have been sensed. Each of these five points are coarsely represented by a coarse point (black point) in the coarse representation: two coarse points $P_n$ and $P_{n+1}$ represent two points of the point cloud sensed at time $t_1$ with an angular angle $\phi_c$ and three coarse points represent three points of the point cloud sensed at time $t_2$ with an angular angle $\phi_c + \Delta\phi$ where $\Delta\phi$ is an azimuthal angle elementary shift. A coarse point that represents a sensed point of the point cloud is namely an occupied coarse point and a coarse point that does not represent a sensed point of the point cloud is namely an unoccupied coarse point. Because the points of the point cloud are represented by occupied coarse points in the coarse representation, the order indices associated with the points of the point cloud are also the order indices associated with the occupied coarse points.

The coarse representation of the point cloud geometry data may then be defined in a two-dimensional coordinate $(\phi, \lambda)$ space.

The coarse representation may also be defined for any types of sensor head including spinning sensors or parametric sensors. The definition of the coarse representation is based on a sensing path defined from sensor characteristics in a two-dimensional angular coordinate $(\phi, \theta)$ space comprising an azimuthal coordinate $\phi$ representative of an azimuthal angle representing a sensing angle of a sensor relative to a referential and an elevation coordinate $\theta$ representative of an elevation angle of a sensor relative to a horizontal referential plane. The sensing path is used to sense the points of the point cloud according to ordered coarse points representing potential locations of sensed points of the point cloud. Each coarse point is defined from one sample index s associated with a sensing time instant along the sensing path and one sensor index $\lambda$ associated with a sensor.

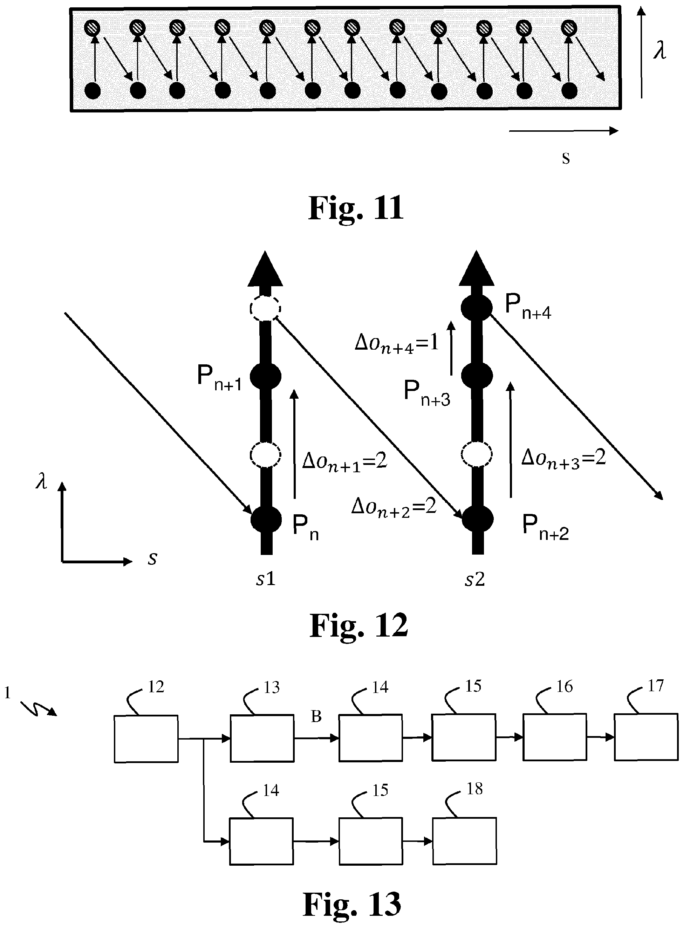

On **Figure 10**, a sensor head comprising two sensors is used. The sensing paths followed by the two sensors are represented in dash lines. For each sample index s (each sensing time instant), two coarse points are defined. The coarse points associated with the first sensor are represented by black shaded points on **Figure 10** and the coarse points associated with the second sensor are represented by a black hashed point. Each of these two coarse points belongs to a sensor sensing path (dashed line) defined from the sensing path SP. **Figure 11** shows schematically a representation of ordered coarse points in the two-dimensional coordinate $(s, \lambda)$

space. Arrows on **Figures 10** and **11** illustrate the links between two successive ordered coarse points.

An order index $o(P)$ is associated with each ordered coarse point according to the rank of said coarse point among the ordered coarse points:

$$o(P) = \lambda + s * \text{K}$$

where K is the number of sensors of a set of sensors or the number of different positions of a single sensor for a same sample index, $\lambda$ is the sensor index of the sensor that sensed the point P of the point cloud at the sensing time instant **s**.

**Figure 12** illustrates ordered coarse points of a coarse representation in accordance with at least one exemplary embodiment.

Five occupied coarse points are represented (black circles): two coarse points $P_n$ and $P_{n+1}$ are occupied by two points of the point cloud sensed at a sensing time instant $t_1$ (corresponding to a sample index $s_1$) and three coarse points are occupied by three points of the point cloud sensed at a sensing time instant $t_2$ (corresponding to a sample index $s_2$).

The coarse representation of the point cloud geometry data may then be defined in a two-dimensional coordinate $(s, \lambda)$ space.

Given the order index $o(P_1)$ of the first coarse point occupied by the first sensed point of the point cloud, and order differences $\Delta o$, one can recursively reconstruct the order index $o(P)$ of any occupied coarse point occupied by a sensed point P of the point cloud by:

$$o(P) = o(P_{-1}) + \Delta o$$

Encoding a coarse representation of point cloud geometry data comprises encoding the order differences $\Delta o$.

**Figure 13** shows schematically a delivery chain 1 of point cloud data in accordance with prior art.

The delivery chain 1 may comprise a sensor device 12, an encoder 13, an encapsulator 14, a parser 15, a decoder 16 and, optionally, analytics device 17 and 18.

The sensor device 12, the encoder 13, the encapsulator 14, the parser 15, the decoder 16 and, optionally the analytics devices 17 and 18 are connected though wireless or wired communications channels or more generally through communication networks.

The sensor device 12 may comprise a spinning sensor head or parametric sensor head that senses (captures) points (of objects) along time according to different sensing directions, i.e. along a sensing path or for different coordinates in the two-dimensional coordinate $(s, \lambda)$ space. To perform points sensing, a sensor of the sensor device 12 sends electromagnetic/light signals in each sensing direction, and if a first object encountered in a given sensing direction is close enough, it returns a part of the signal to the sensor by reflecting it. The sensor can then estimate the distance to the object from the time difference between the sending and the receiving of the signal and it can provide sensed data (relative to a point) comprising point geometry data and other attributes like color, reflectance, sensing timestamps, etc., for a given sensing direction (coordinates $(s, \lambda)$).

In a first example of the delivery chain 1, the sensing device 12 may (regularly or not) provide packets of sensed data (relative to points of a point cloud) possibly through a first communication channel (for example a transmission bus channel) or through a first communication network to the encoder 13. The encoder 13 may provide a bitstream B organized in several chunks (for example slices) to the encapsulator 14. The encapsulator 14 encapsulates the chunks in encapsulating containers, and each encapsulating container may be sent to the parser 15 through a second communication channel or through a second communication network, as soon as it is available/ready (for low latency streaming). The parser 15 receives the encapsulating containers and extracts the chunks of encoded point cloud data that is provided to the decoder 16 for decoding. Decoded points are then provided, for example, to the (real time) external analytics device 17.

In a second example of the delivery chain 1, the sensing device 12 may (regularly or not) provide packets of sensed data (relative to points of a point cloud) possibly through a first communication channel (for example a transmission bus channel) or through a first communication network to the encapsulator 14. The encapsulator 14 encapsulates the chunks in encapsulating containers, and each encapsulating container may be sent to the parser 15 through a second communication channel or through a second communication network as soon as it is available/ready (for low latency streaming). The parser 15 receives the encapsulating containers and extracts the chunks of encoded point cloud data that is provided, for example, to the (real time) external analytics device 18.

In the automotive domain, a vehicle may host a sensing device 12 comprising a set of LiDAR sensors located around the vehicle such that the combination of the data sensed from all the sensors constitute a full view all around the vehicle, i.e. a spatial sensing coverage of the sensing device 12.

**4** shows an example of a vehicle 2 driving on a two-lane road. The vehicle 2 is equipped with a Lidar-sensor head comprising Lidar sensors 20, 21 and 22 located on front of the vehicle, Lidar sensor 23 located on right of the vehicle, Lidar sensor located on left of the vehicle and Lidar sensors 24, 25 and 26 located on back of the vehicle. Each Lidar sensor 20, 21,...,27 has a field of view that defines a spatial area R20, R21,...,R27. A spatial sensing coverage of the sensing device 12 is defined from the field of view and distance covered by each Lidar sensor of the sensing device 12. The spatial sensing coverage may be a 360° view with possibly some overlaps between areas R20, R21,...,R27.

Point cloud frames (i.e. temporal instances of a point cloud) temporally sensed by the Lidar sensor head are representative of all objects located all around the vehicle 2.

But some point cloud frame may have missing points because of a full or partial sensor failure or because of unreliable transmissions between the sensing device 12, the encoder 13, the encapsulator 14 and the parser 15 according to the first or second example of the delivery chain 1 of **Figure 13**.

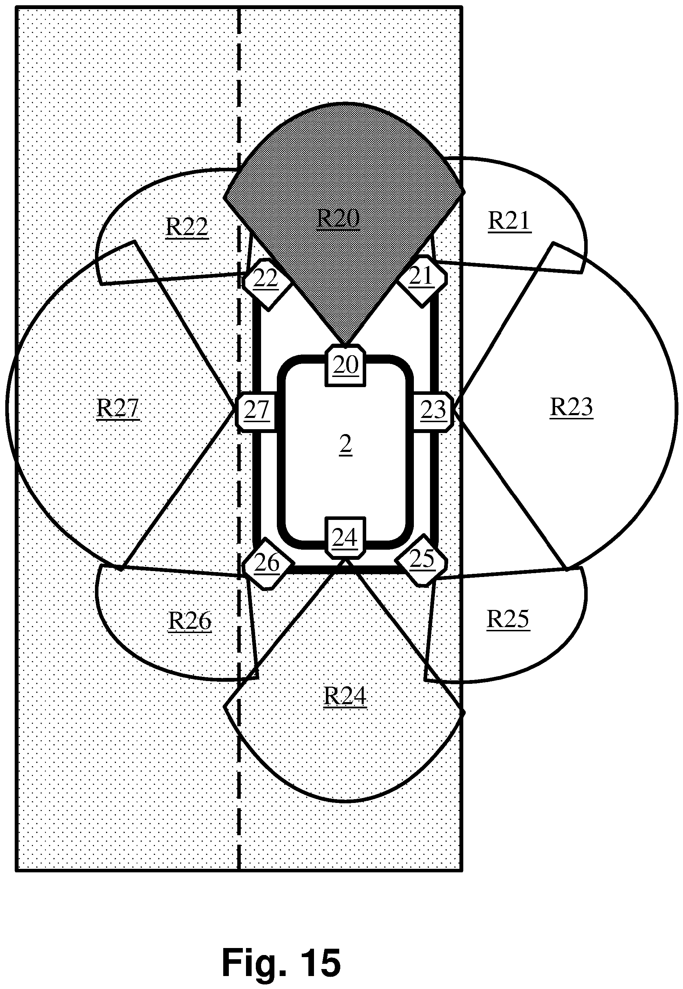

In case of full sensor failure, and if the sensing device 12 comprises a single sensor, the loss of data is complete and the sensing device 12 fails to provide any sensed data. As illustrated on **Figure 15**, when the vehicle 2 is equipped with a sensing device 12 comprising a LiDAR sensor head with multiple sensors, one of the Lidar sensor, for example the Lidar sensor 20, may be defective. For example, one sensor may have defective parts due to extended usage or after a shock with an external object, e.g. a shock with another vehicle. The sensing device 12 provides data sensed by some of the sensors but fails to provide sensed data for some of spatial areas (e.g. R20) around the vehicle 2. There may be an absence of points (sensed data) not because of absence of object but because of the failure of one or more sensors (e.g. 20).

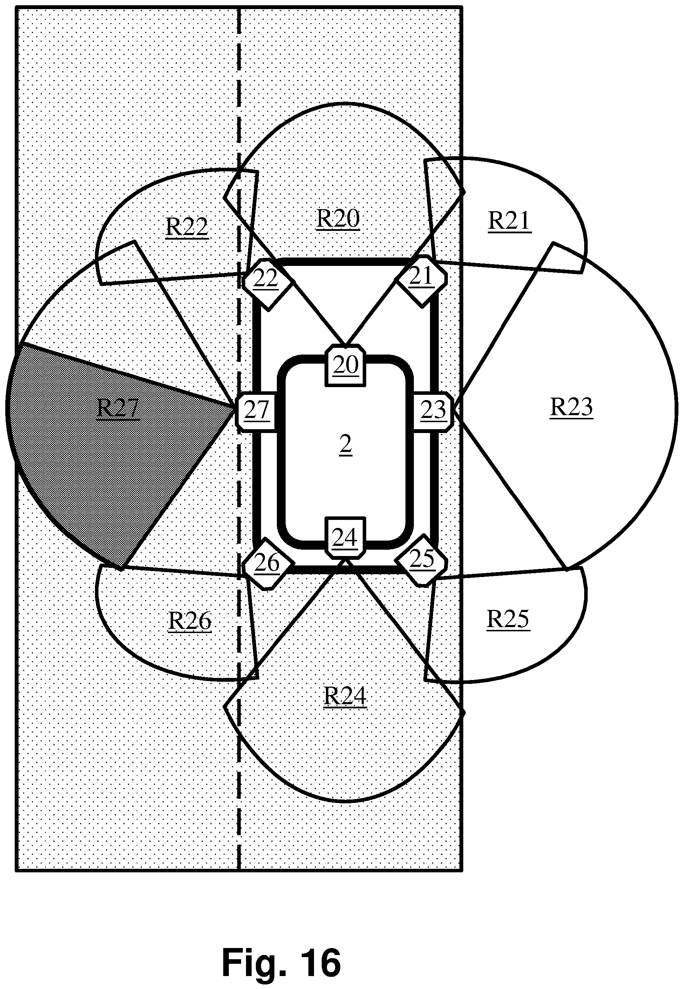

In case of partial sensor failure, a sensor of the sensing device 12 provides packets of sensed data but the reliability of these packets of sensed data cannot be guaranteed. This may happen because of a failure of mechanical parts of a sensor used to move the sensor during a sensing cycle. For example, as illustrated on **Figure 16**, a sensor 27 is able to sense only a sub-section of the spatial area R27 because of a failure of its mechanical parts used to move it to sense the full spatial area R27. On **Figure 16**, the sensor 27 is able to sense only the white sub-section of the spatial area R27. The grey shaded sub-section of the spatial area R27 is not sensed by the sensor 27.

In case of partial sensor failure, it is still important to sense and provide sensed data that is reliable, i.e. the sensed data relative to the white sub-section of the spatial area R27, but at the same time to signal the absence of points in a point cloud frame caused by the absence of sensed data for the grey-shaded sub-section of the spatial area R27.

In case of unreliable communications, there may be different reasons for having missing points in a point cloud frame either at the input of the encoder 13 or at the input of the encapsulator 14 or at the input of the parser 15. In the best case, a packet of sensed data or an encapsulating container which failed to be transmitted can be retransmitted later. In the worst case it is completely lost, and the sensed data in this packet sensed data or in this encapsulating container are lost. The worst case may occur in low-latency transmission scenarios, where non reliable transmission protocols are used to improve the latency and allows dropping information which is too late (the sensed data becoming too late mainly because of transmission/retransmission issues and retransmission latency). According to the first example of the delivery chain 1 of **Figure 13**, the encoder 13 (or the parser 15) receiving packets of sensed data (or encapsulating containers) coming from the sensing device 12 (from the encapsulator 14), needs to know that the absence of sensed data or points in a point cloud frame is caused by a lack of sensed data and not of an absence of an object around the vehicle 2. According to the second example of the delivery chain 1 of **Figure 13**, the encapsulator 14 (or the parser 15) receiving packets of sensed data coming from the sensing device 12 (from the encapsulator 14), needs to know that the absence of sensed data is caused by a lack of sensed data and not of an absence of an object around the vehicle 2.

If no measure can be taken by the control system on the vehicle to compensate for sensor failure or unreliable communications, it is important that the point cloud frame be labelled with missing sensed data (missing points).

In automotive applications knowing that there is an object somewhere, and so, having sensed data or points in the point cloud at the object location is particularly important. In the absence of sensed data (points), it may be assumed that there is nothing. This assumption may be wrong, and automatic decisions made based on this assumption can have tragic consequences. For instance, a self-driving vehicle assuming that there is nothing in a given spatial area (e.g. the grey-shaded sub-section of **Figure 16**) because there is no point (sensed data) received for that given sub-section, becomes dangerous if there is no point (no sensed data) because of a sensing failure or because of a transmission issue from another vehicle for instance.

Sensing devices or point cloud codecs fail to provide solutions to indicate the reliability of not having sensed data (points) for a given sensing direction: In G-PCC, a full "rotation" of the spinning sensors (or equivalently a complete sensing cycle of a parametric sensor along a sensing path), is assumed to provide all the sensed data (a complete point cloud frame without any missing point): there is nothing to indicate if the sensor has really sensed all the sensing directions defined by a full rotation or a complete sensing path.

Moreover, for practical real-time applications, considering a full "rotation" of the spinning sensor or a complete sensing path is not considered as a good practice: data sensed at the beginning of the rotation or sensing path may become obsolete/too late if waiting for complete sensed data (complete point cloud frame) to process it, because the sensing (acquisition) takes time. Then it is better practice to process the sensed data by chunks which may be available sooner. Similarly, there is currently nothing to indicate which "part" (mostly an angular section) of the full rotation or of the sensing path has really been covered by the sensor in a chunk/slice.

At least one exemplary embodiment of the present application has been devised with the foregoing in mind.

SUMMARY

The invention is defined by the appended independent claims and will be more readily understood after reading the following detailed description in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows schematically a side view of a sensor head and some of its parameters in accordance with prior art;

**Figure 2** shows schematically a top view of the sensor head and some of its parameters in accordance with prior art;

**Figure 3** shows schematically a regular distribution of data sensed by a spinning sensor head in accordance with prior art;

**Figure 4** shows schematically a representation of a point of a point cloud in a 3D space in accordance with prior art;

**Figure 5** shows schematically an example of a sensor head able to sense a real scene following a programmable sensing path in accordance with prior art;

**Figure 6** shows schematically an example of a sensor head able to sense a real scene following a programmable sensing path according to different sensing frequencies in accordance with prior art;

**Figure 7** shows schematically an example of a sensor head able to sense a real scene following a programmable zigzag sensing path according to different sensing frequencies in accordance with prior art;

**Figure 8** shows schematically a single sensor head able to sense a real scene following a programmable zigzag sensing path according to different sensing frequencies in accordance with prior art;

**Figure 9** shows schematically ordered coarse points of a coarse representation in accordance with prior art;

**Figure 10** shows schematically an example of an ordering of coarse points in accordance with prior art;

**Figure 11** shows schematically a representation of ordered coarse points in the two-dimensional coordinate $(s, \lambda)$ space;

**Figure 12** shows schematically ordered coarse points of a coarse representation in accordance with prior art;

**Figure 13** shows schematically a delivery chain of point cloud data in accordance with prior art.

**Figure 14** shows an example of a vehicle 2 driving on a two-lane road;

**Figure 15** shows an example of a full failure of a sensor of the vehicle 2 driving on a two-lane road;

**Figure 16** shows an example of a partial failure of a sensor of the vehicle 2 driving on a two-lane road;

**Figure 17** shows schematically a schematic block diagram of steps of a method of encapsulating point cloud data in encapsulating containers in accordance with at least one exemplary embodiment;

**Figure 18** shows schematically a schematic block diagram of steps of a variant of the method of **Figure 17** in accordance with at least one exemplary embodiment;

**Figure 19** shows a schematic block diagram of steps of a method 200 of parsing point cloud data from encapsulating containers in accordance with at least one exemplary embodiment;

**Figure 20** shows schematically a schematic block diagram of steps of a variant of the method of **Figure 19** in accordance with at least one exemplary embodiment;

**Figure 21** shows an example of a syntax element used to carry a first data on a presence of a sensing reliability score in accordance with at least one exemplary embodiment;

**Figure 22** shows an example of a syntax element used to encapsule a first data on a presence of a sensing reliability score in accordance with at least one exemplary embodiment;

**Figure 23** shows an example of a syntax element used to encapsulate a first a first data on a presence of a sensing reliability score and a sensing reliability score in accordance with at least one exemplary embodiment; and

**Figure 24** illustrates a schematic block diagram of an example of a system in which various aspects and exemplary embodiments are implemented.

Similar reference numerals may have been used in different figures to denote similar components.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed.

At least one of the aspects generally relates to encapsulating/parsing point cloud data of a G-PCC bitstream into/from encapsulating containers.

The present aspects are not limited to G-PCC bitstreams, i.e. bitstreams that conform to MPEG standards such as MPEG-I part 5, part 9 that relates to the Point Cloud Compression or MPEG-G (ISO/IEC 23092) part 2 that relates to genomic information compression and transport and may be applied to bitstreams that conform to other standards and recommendations, whether pre-existing or future-developed, and extensions of any such standards and recommendations (including MPEG-I part 5 or part 9). Unless indicated otherwise, or technically precluded, the aspects described in the present application may be used individually or in combination.

The spatial sensing coverage of the sensing device 12 comprises at least one spatial region R that may overlap partially to each other.

For example, when points of the point cloud are represented in a 3D Cartesian (x,y,z) coordinate system, a spatial region R may be a cuboid defined by a center (x,y,z) and dimension (width, height, depth).

For example, when points of the point cloud are represented in a polar coordinate system, a spatial region R may be described by an angular sector, e.g. defined between two particular angles.

For example, when points of the point cloud are represented in a spherical coordinate system, a spatial region R may be described by a cone, e.g. defined by a direction and an angle.

Those spatial region definitions are straightforward examples and are not exhaustive. The present aspects are not limited to those spatial region definitions and more complex region shapes may also be defined.

In brief, the present invention relates to encapsulating/parsing point cloud data in/from encapsulating containers. The encapsulating method writes point cloud data in at least one of said encapsulating containers; for at least one spatial region of a spatial sensing coverage of a sensing device, the method writes a first data on a presence of a sensing reliability score in one of said encapsulating containers; and if the first data indicates that a sensing reliability score is present, the method writes said determined sensing reliability score in one of said encapsulating containers. The parsing method reads, from at least one encapsulating container, point cloud data associated with at least one spatial region of a spatial sensing coverage of a sensing device; for each of said at least one spatial region, the method reads a first data on a presence of a sensing reliability score from one encapsulating container; and, if the first data indicates that a sensing reliability score is present, the method reads said sensing reliability score from one encapsulating container.

The sensing reliability score relative to a spatial region indicates whether the spatial region of the spatial sensing coverage has been unsensed (unscanned) or, inversely, sensed (scanned).

In an unsensed spatial region, the absence of points in the point cloud may not be considered as an absence of physical object in the meaning of the sensing process. In a sensed region, an absence of points in the point cloud may be considered as an absence of a physical object.

According to the first example of the delivery claim 1 of **Figure 13**, if transmission errors happen between the sensing device 12 and the encoder 13 or if the encoder 13 is configured to selectively remove some sensing directions from the point cloud, the encoder 13 can indicate the missing or removed parts of the spatial sensing coverage through the sensing reliability scores. Also, even if transmission errors happen between the encapsulator 14 and the parser 15, the parser 15 (or the decoder 16) is able to determine the spatial sensing coverage of the received chunks. The decoder 16 may then decode the point cloud geometry data (and optionally other associated sensed data) for points corresponding to spatial regions indicated by the decoded sensing reliability scores as being reliable and for which sensed data have been received.

According to the second example of delivery claim 1 of **Figure 13,** if transmission errors happen between the sensing device 12 and the encapsulator 14 or if the encapsulator 14 is configured to selectively remove some sensing directions from the point cloud, the encapsulator 14 can indicate the missing or removed parts of the spatial sensing coverage through the sensing reliability scores. Also, even if transmission errors happen between the encapsulator 14 and the parser 15, the parser 15 (or the analytics device 18) is able to determine the spatial sensing coverage of the received chunks. The analytics 18 may then analyzed the point cloud geometry data (and optionally other associated sensed data) for points corresponding to spatial regions indicated by the sensing reliability scores as being reliable and for which sensed data have been received.

The sensing reliability scores may thus be used to improve decisions taken by analytics devices. For example, the sensing reliability scores may improve automatic decisions made in automotive domain.

Encapsulating/parsing the sensing reliability scores in/from encapsulating container is also advantageous because it may reduce the energy consumption in a decoding application by allowing spatially locating chunks of point cloud data and thus by allowing decoding only portions of a point cloud that are useful for a particular application. In one example, an application may exploit the sensing reliability scores to guide the decoding process, by asking the decoder to only decode a subset of the received chunks. In another example, an application may receive different streams of encapsulating containers coming from several vehicles and use sensing reliability scores to quickly locate chunks spatially and eventually select interesting chunks to decode them and fuse (parts of) the decoded point cloud information coming from the different streams, to provide it to another application.

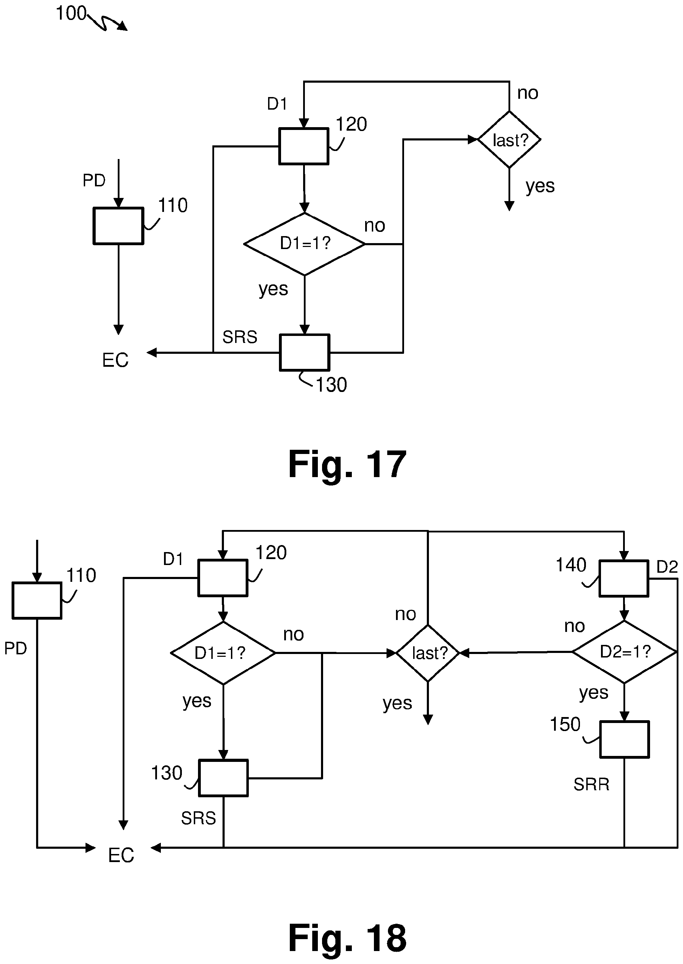

**Figure 17** shows schematically a schematic block diagram of steps of a method of encapsulating point cloud data encapsulating containers EC in accordance with at least one exemplary embodiment.

Point cloud data PD may be received from the encoder 13 according to the first example of the delivery chain 1 of **Figure 13,** or from the sensing device 12 according to the second example of the delivery chain 1 of **Figure 13**. Point cloud data PD may refer to point cloud geometry data and/or attribute data. Point cloud data PD is sensed by a sensor of the sensor device 12 and belongs to a spatial region R of the spatial sensing coverage of the sensing device 12.

In step 110, point cloud data PD is written in at least one encapsulating container EC.

For each of the spatial region R, in step 120, a first data D1 on a presence of a sensing reliability score is written in one encapsulating container EC.

The first data D1 indicates if a sensing reliability score may be determined for a spatial region R and if said sensing reliability score is present in one encapsulating container EC. If the first data D1 indicates that a sensing reliability score SRS may not be determined and/or is not present in one encapsulating container EC, another spatial region R is considered.

If the first data D1 indicates that a sensing reliability score SRS may be determined and is present in one encapsulating container EC, in step 130, the sensing reliability score SRS is encapsulated in one encapsulating container EC. Next, another spatial region R is considered.

For example, a sensing reliability score SRS relative to a spatial region R may be determined if the sensing device 12 is able to provide an information relative to a sensor intended to sense the spatial region R.

When each spatial region R has been considered, the method ends.

In one exemplary embodiment, the first data D1 may be a binary value (flag). For example, the flag equals 1 when a sensing reliability score SRS is present and 0 otherwise.

In one exemplary embodiment, the sensing reliability score SRS may be a binary value (flag). For example the value 1 is assigned to a sensing reliability score SRS to indicate that a spatial region has been sensed and that the absence of point cloud data for a certain position in that spatial region means that no physical object were found at this precise position. The value 0 is assigned to a sensing reliability score SRS to indicate that a spatial region has not been sensed that the absence of point cloud data for a certain position in that spatial region does not mean that no physical object were present at this precise position (the status is unknown).

In one exemplary embodiment, the sensing reliability score SRS may be a value belonging to a range of values to take into account a degree of reliability of a spatial region when making a decision. The range of values may be closed, e.g. 0 to 1, open-ended, e.g. 0 to infinity, or unbounded, e.g. the domain of real values.

For example, a higher sensing reliability score SRS may be assigned to a spatial region R when multiple sensors have covered that spatial region R which may give a higher degree of confidence. An application should take into account the reliability when processing the encapsulated data and deriving actions, results, interpretations, etc.

In variant of the method 100, illustrated on **Figure 18**, for each spatial region R, in step 140, a second data D2 may be written in on encapsulating container EC. The second data D2 indicates if a reliability reason data RR is present in one encapsulating container EC. If the second data D2 indicates that a reliability reason data RR is not present, another spatial region R is considered.

If the second data D2 indicates that a sensing reliability reason data RR is present, in step 150, a sensing reliability reason data SRR is written in one encapsulating container EC. Next, another spatial region R is considered.

When all the spatial regions R have been considered, the methods ends.

Adding a sensing reliability reason data SRR to one encapsulating container EC may be beneficial for the encoder 13, the encapsulator 14, the parser 15, the decoder 16 or the analytics devices 17 and 18 to indicate a reason to assign such a particular sensing reliability score SRS.

Such sensing reliability reason data SRR may be sensor specific or application specific.

In one exemplary embodiment, the second data D2 may be a binary value (flag). For example, the flag equals 1 when the second data D2 indicates that a sensing reliability reason data SRR is present and 0 otherwise.

In one exemplary embodiment, the sensing reliability reason SRR may relate to one of the following reasons:

- No sensed data due to sensor failure;

- Bus transmission error;

- Network transmission error;

- Application decision to discard a spatial region;

- User choice; or

- Erratic sensed data due to sensor failure.

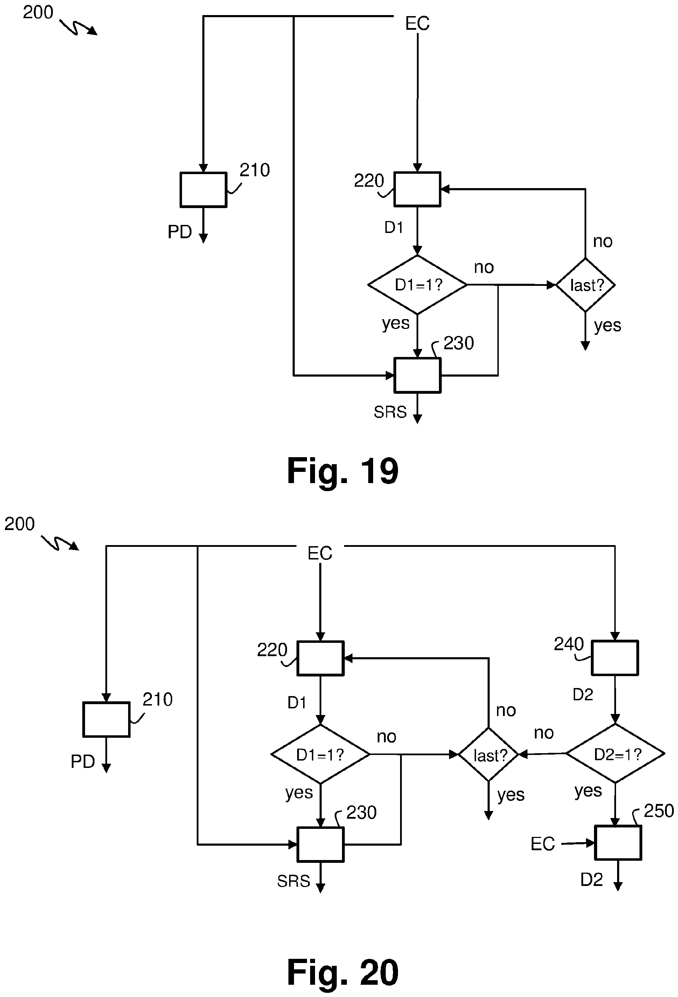

**Figure 19** shows a schematic block diagram of steps of a method 200 of parsing point cloud data from encapsulating containers in accordance with at least one exemplary embodiment;

In step 210, point cloud data PD is read from at least one encapsulating container EC.

For each of the spatial region R, in step 220, a first data D1 is read from one encapsulating container EC.

If the first data D1 indicates that a sensing reliability score SRS is not present, e.g. D1=0, another spatial region R is considered.

If the first data D1 indicates that a sensing reliability score SRS is present, e.g. D1=1, in step 230, a sensing reliability score SRS is read from at least one encapsulating container EC. Next, another spatial region R is considered.

When all the spatial regions R have been considered, the methods ends.

In one exemplary embodiment of the method 200, illustrated on **Figure 20**, for each spatial region R, in step 240, a second data D2 may be read from on encapsulating container EC.

If the second data D2 indicates that a sensing reliability reason data SRR is not present, another spatial region R is considered.

If the second data D2 indicates that a sensing reliability reason data SRR is present, in step 250, a sensing reliability reason RR is read from on encapsulating container EC. Next, another spatial region R is considered.

In one exemplary embodiment, the encapsulating containers EC may refer to a RTP packets as defined, for example, in the document "RTP: A Transport Protocol for Real-Time Applications", (source: https://datatracker.ietf.org/doc/html/rfc3550).

In one exemplary embodiment, the encapsulating containers EC may refer to data structures of a file container, namely G-PCC system, as defined in the document "ISO/IEC 23090-18 Information technology - Coded representation of immersive media - Part 18: Carriage of geometry-based point cloud compression data".

G-PCC system leverages the ISOBMFF standard (ISO/IEC 14496-12, Information technology - Coding of audio-visual objects - Part 12: ISO base media file format) by extending it to support the encapsulation of G-PCC bitstreams B into an ISOBMFF file or an ISOBMFF segment data structure.

GPCC system defines several types of metadata that can be stored along with the point cloud data into an ISOBMFF file in order to provide additional description of this point cloud data. Such metadata may be encapsulated in particular syntax element relative to, for example, bounding box information, tile mapping information, spatial region information, static spatial region information, dynamic spatial region information, viewport information (static and dynamic) and intrinsic camera information.

In one exemplary embodiment, the first data D1 may be written/read in/from the spatial region information syntax element, namely **GPCCSpatialRegionStruct** syntax element of G-PCC system.

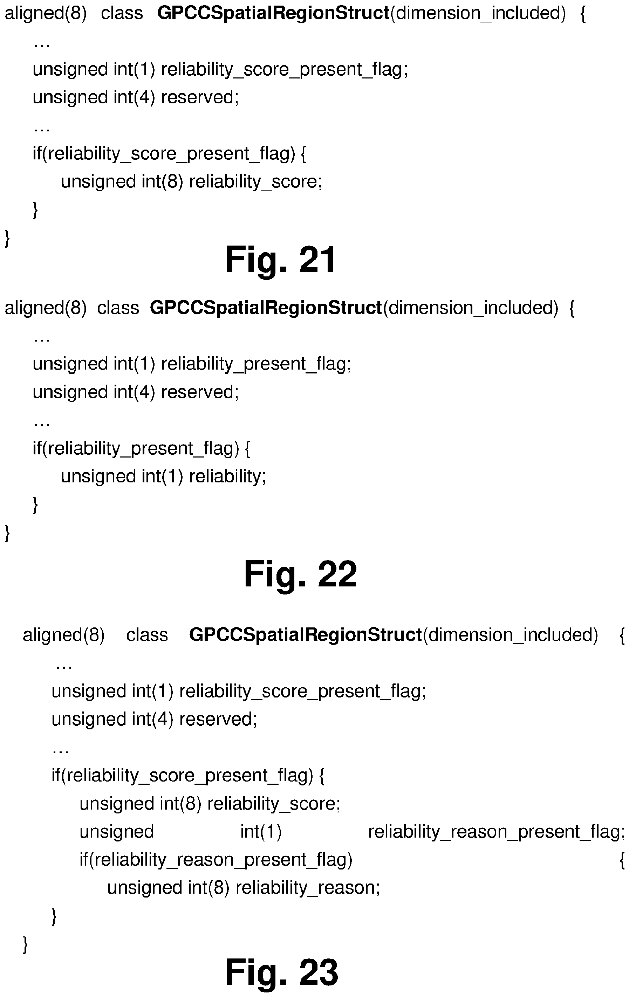

As illustrated on **Figure 21**, the first data D1 is a flag (unsigned integer reliability_score_present_flag) of the syntax element **GPCCSpatialRegionStruct.** Alternatively, this first data D1 may also be present at a higher-level data structure, e.g. sample entry, in such a way it would apply to all data structures of type **GPCCSpatialRegionStruct**. Dotted line on **Figure 21** in the syntax element indicates that the syntax element **GPCCSpatialRegionStruct** may comprise other information such as 2D spatial region information including an anchor point and a size of a 3D spatial region in the cartesian coordinate along to X, Y, Z axes relative to the anchor point.

In one exemplary embodiment, the sensing reliability score data SRS may be written/read in/from the spatial region information structure syntax element, namely **GPCCSpatialRegionStruct** syntax element of G-PCC system.

As illustrated on **Figure 21**, the sensing reliability score data SRS is an unsigned integer (unsigned integer of 8 bits reliability_score) of the syntax element **GPCCSpatialRegionStruct**.

For example, the sensing reliability score data SRS indicates the reliability score for a spatial region R in unit of 1/255 in the range of 0 to 1. A signaled value of 0 expresses a score of 0 which means the sensed data in the spatial region is fully unreliable. A signaled value of 1 means a score of 1 which means the sensed data in the spatial region R is fully reliable.

In variant, illustrated on **Figure 22**, the sensing reliability score data SRS is a binary value (unsigned integer of 1 bit reliability) of the syntax element **GPCCSpatialRegionStruct**.

In one exemplary embodiment, the second data D2 may be written/read in/from the spatial region information structure syntax element, namely **GPCCSpatialRegionStruct** syntax element of G-PCC system.

As illustrated on **Figure 23**, the second data D2 is a flag (unsigned integer reliability_reason_present_flag) of the syntax element **GPCCSpatialRegion-Struct.** Dotted line on **Figure 23** in the syntax element indicates that the syntax element **GPCCSpatialRegion-Struct** may comprise other information such as 2D spatial region information including an anchor point and a size of a 3D spatial region in the cartesian coordinate along to X, Y, Z axes relative to the anchor point.

In one exemplary embodiment, the sensing reliability reason data SRR may be written/read in/from the spatial region information structure syntax element, namely **GPCCSpatialRegionStruct** syntax element of G-PCC system.

As illustrated on **Figure 23**, the sensing reliability reason data SRR is an unsigned integer (unsigned reliability_reason) of the syntax element **GPCCSpatial-RegionStruct.**

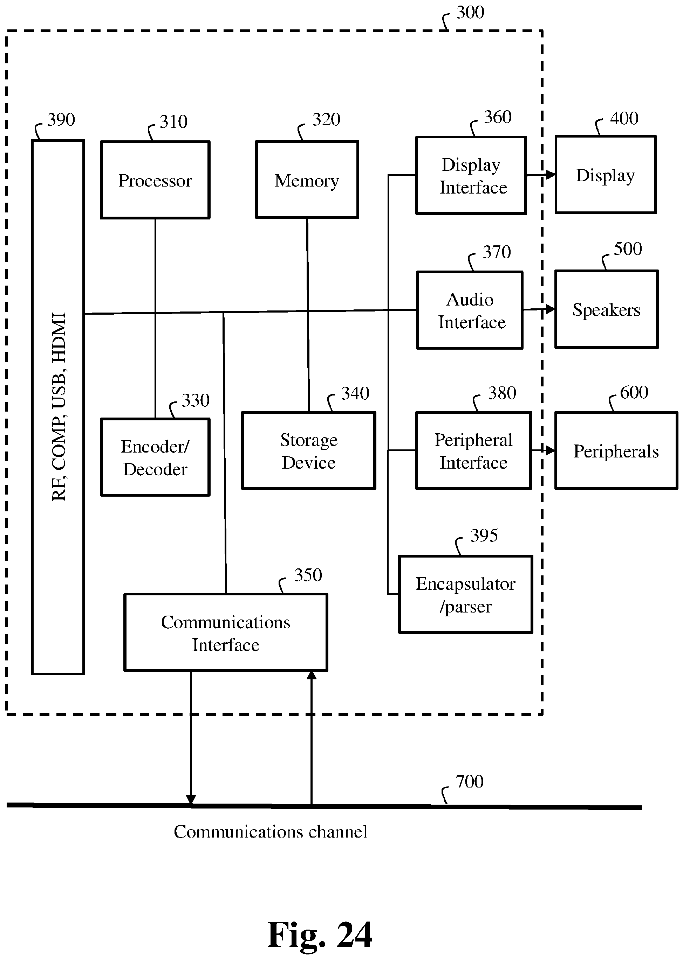

**Figure 24** shows a schematic block diagram illustrating an example of a system in which various aspects and exemplary embodiments are implemented.

System 300 may be embedded as one or more devices including the various components described below. In various embodiments, the system 300 may be configured to implement one or more of the aspects described in the present application.

Examples of equipment that may form all or part of the system 300 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing a point cloud, a video or an image or other communication devices. As should be clear, the equipment may be mobile and even installed in a mobile vehicle.

Elements of system 300, singly or in combination, may be embodied in a single integrated circuit (IC), multiple ICs, and/or discrete components. For example, in at least one embodiment, the processing and encoder/decoder elements of system 300 may be distributed across multiple ICs and/or discrete components. In various embodiments, the system 300 may be communicatively coupled to other similar systems, or to other electronic devices, via, for example, a communications bus or through dedicated input and/or output ports.

The system 300 may include at least one processor 310 configured to execute instructions loaded therein for implementing, for example, the various aspects described in the present application. Processor 310 may include embedded memory, input output interface, and various other circuitries as known in the art. The system 300 may include at least one memory 320 (for example a volatile memory device and/or a non-volatile memory device). System 300 may include a storage device 340, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 340 may include an internal storage device, an attached storage device, and/or a network accessible storage device, as non-limiting examples.

The system 300 may include an encoder/decoder module 330 configured, for example, to process sensed data to provide a bitstream B of point cloud data including encoded/decoded point cloud geometry data, encoded/decoded pixel information, encoded/decoded DNA codes. The encoder/decoder module 330 may include its own processor and memory. The encoder/decoder module 330 may represent module(s) that may be included in a device to perform the encoding and/or decoding functions. As is known, a device may include one or both encoding and decoding modules. Additionally, encoder/decoder module 330 may be implemented as a separate element of system 300 or may be incorporated within processor 310 as a combination of hardware and software as known to those skilled in the art.

The system 300 may include an encapsulator/parser 395 configured, for example, to write/read point cloud data, the first data D1, the sensing reliability score SRS, the second data D2 and the reliability reason data SRR in one encapsulating container EC.

Program code to be loaded onto processor 310 or encoder/decoder 330 or encapsulator/parser 395 to perform the various aspects described in the present application may be stored in storage device 340 and subsequently loaded onto memory 320 for execution by processor 310. In accordance with various embodiments, one or more of processor 310, memory 320, storage device 340, and encoder/decoder module 330 may store one or more of various items during the performance of the processes described in the present application. Such stored items may include, but are not limited to, a point cloud frame, encoded/decoded geometry/attributes videos/images or portions of the encoded/decoded geometry/attribute video/images, a bitstream, matrices, variables, the first data D1, the sensing reliability score SRS, the second data D2 and the reliability reason data SRR, an encapsulating container and intermediate or final results from the processing of equations, formulas, operations, and operational logic.

In several embodiments, memory inside of the processor 310 and/or the encoder/decoder module 330 and/or the encapsulator/parser 395 may be used to store instructions and to provide working memory for processing that may be performed during encoding/decoding or the encapsulating/parsing.

In other embodiments, however, a memory external to the processing device (for example, the processing device may be either the processor 310 or the encoder/decoder module 330) may be used for one or more of these functions. The external memory may be the memory 320 and/or the storage device 340, for example, a dynamic volatile memory and/or a non-volatile flash memory. In several embodiments, an external non-volatile flash memory may be used to store the operating system of a television. In at least one embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), HEVC (High Efficiency Video coding), VVC (Versatile Video Coding), or MPEG-I part 5 (V-PCC) or part 9 (G-PCC).

The input to the elements of system 300 may be provided through various input devices as indicated in block 390. Such input devices include, but are not limited to, (i) an RF portion that may receive an RF signal transmitted, for example, over the air by a broadcaster, (ii) a Composite input terminal, (iii) a USB input terminal, and/or (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various embodiments, the input devices of block 390 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 300 to other electronic devices across USB and/or HDMI connections. It is to be understood that various aspects of input processing, for example, Reed-Solomon error correction, may be implemented, for example, within a separate input processing IC or within processor 310 as necessary. Similarly, aspects of USB or HDMI interface processing may be implemented within separate interface ICs or within processor 310 as necessary. The demodulated, error corrected, and demultiplexed stream may be provided to various processing elements, including, for example, processor 310, and encoder/decoder 330 operating in combination with the memory and storage elements to process the data stream as necessary for presentation on an output device.

Various elements of system 300 may be provided within an integrated housing. Within the integrated housing, the various elements may be interconnected and transmit data therebetween using suitable connection arrangement 390, for example, an internal bus as known in the art, including the I2C bus, wiring, and printed circuit boards.

The system 300 may include communication interface 350 that enables communication with other devices via communication channel 700. The communication interface 350 may include, but is not limited to, a transceiver configured to transmit and to receive data over communication channel 700. The communication interface 350 may include, but is not limited to, a modem or network card and the communication channel 700 may be implemented, for example, within a wired and/or a wireless medium.

Data, such encapsulating containers EC, may be streamed to the system 300, in various embodiments, using a Wi-Fi network such as IEEE 802.11. The Wi-Fi signal of these embodiments may be received over the communications channel 700 and the communications interface 350 which are adapted for Wi-Fi communications. The communications channel 700 of these embodiments may be typically connected to an access point or router that provides access to outside networks including the Internet for allowing streaming applications and other over-the-top communications.

Other embodiments may provide streamed data to the system 300 using a set-top box that delivers the data over the HDMI connection of the input block 390.

Still other embodiments may provide streamed data to the system 300 using the RF connection of the input block 390.

The streamed data may be used as a way for signaling information used by the system 300. The signaling information may comprise encapsulated containers EC and/or information such a number of points of a point cloud, coordinates and/or sensor setup parameters.

It is to be appreciated that signaling may be accomplished in a variety of ways. For example, one or more syntax elements, flags, and so forth may be used to signal information to a corresponding decoder in various embodiments.

The system 300 may provide an output signal to various output devices, including a display 400, speakers 500, and other peripheral devices 600. The other peripheral devices 600 may include, in various examples of embodiments, one or more of a stand-alone DVR, a disk player, a stereo system, a lighting system, and other devices that provide a function based on the output of the system 300.

In various embodiments, control signals may be communicated between the system 300 and the display 400, speakers 500, or other peripheral devices 600 using signaling such as AV.Link (Audio/Video Link), CEC (Consumer Electronics Control), or other communications protocols that enable device-to-device control with or without user intervention.

The output devices may be communicatively coupled to system 300 via dedicated connections through respective interfaces 360, 370, and 380.

Alternatively, the output devices may be connected to system 300 using the communications channel 700 via the communications interface 350. The display 400 and speakers 500 may be integrated in a single unit with the other components of system 300 in an electronic device such as, for example, a television.

In various embodiments, the display interface 360 may include a display driver, such as, for example, a timing controller (T Con) chip.

The display 400 and speaker 500 may alternatively be separate from one or more of the other components, for example, if the RF portion of input 390 is part of a separate set-top box. In various embodiments in which the display 400 and speakers 500 may be external components, the output signal may be provided via dedicated output connections, including, for example, HDMI ports, USB ports, or COMP outputs.

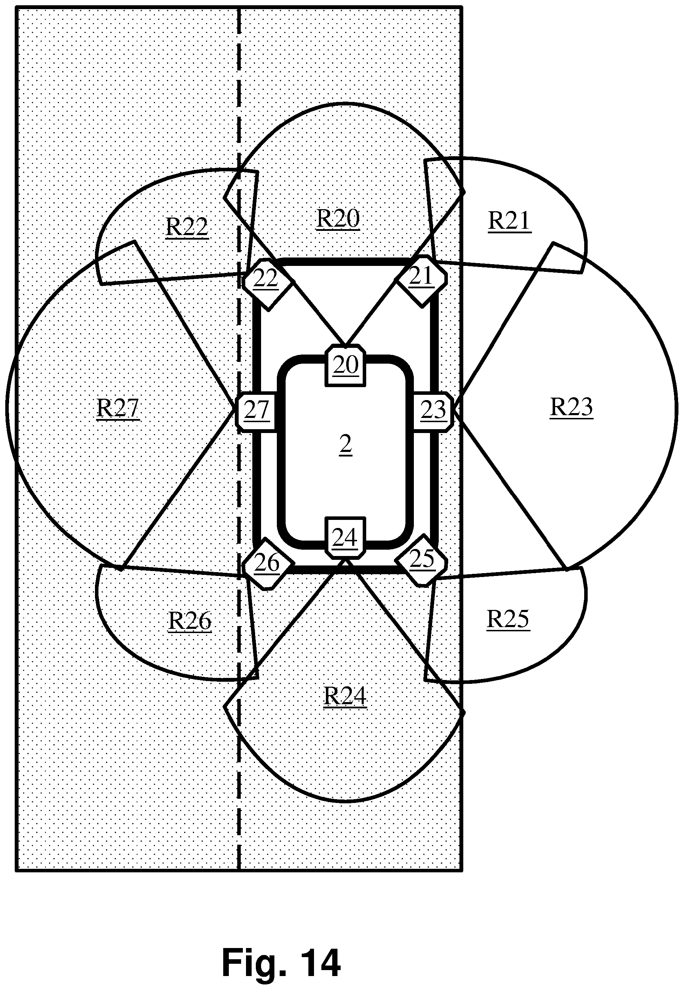

In **Fig. 1-24,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As should be clear, the equipment may be mobile and even installed in a mobile vehicle.

Computer software may be implemented by the processor 310 or by hardware, or by a combination of hardware and software. As a non-limiting example, the embodiments may be also implemented by one or more integrated circuits. The memory 320 may be of any type appropriate to the technical environment and may be implemented using any appropriate data storage technology, such as optical memory devices, magnetic memory devices, semiconductor-based memory devices, fixed memory, and removable memory, as non-limiting examples. The processor 310 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry encapsulated containers EC of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the specification are not necessarily all referring to the same exemplary embodiment/example/implementation, nor are separate or alternative exemplary embodiment/examples/implementation necessarily mutually exclusive of other exemplary embodiments/examples/implementation. Reference numerals appearing in the claims are by way of illustration only and shall have no limiting effect on the scope of the claims. Although not explicitly described, the present embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received point cloud frame (including possibly a received bitstream which encodes one or more point cloud frames) in order to produce a final output suitable for display or for further processing in the reconstructed point cloud domain. In various embodiments, such processes include one or more of the processes typically performed by a decoder. In various embodiments, such processes also, or alternatively, include processes performed by a decoder of various implementations described in this application, for example,

As further examples, in one embodiment "decoding" may refer only to de-quantizing, in one embodiment "decoding" may refer to entropy decoding, in another embodiment "decoding" may refer only to differential decoding, and in another embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input point cloud frame in order to produce an encoded bitstream. In various embodiments, such processes include one or more of the processes typically performed by an encoder. In various embodiments, such processes also, or alternatively, include processes performed by an encoder of various implementations described in this application.

As further examples, in one embodiment "encoding" may refer only to quantizing, in one embodiment "encoding" may refer only to entropy encoding, in another embodiment "encoding" may refer only to differential encoding, and in another embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, this application may refer to "obtaining" various pieces of information. Obtaining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

Also, as used herein, the word "signal" refers to, among other things, indicating something to a corresponding decoder. For example, in certain embodiments the encoder signals a particular information such a number of points of the point cloud or coordinates or sensor setup parameters. In this way, in an embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments.

While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of encapsulating point cloud data in encapsulating containers, the method comprising writing (110) point cloud data in at least one of said encapsulating containers, **characterized in that** the method further comprises for at least one spatial region of a spatial sensing coverage of a sensing device:

   - writing (120) a first data on a presence of a sensing reliability score in one of said encapsulating containers; and
   - if the first data indicates that a sensing reliability score is present in one encapsulating container, writing (130) said sensing reliability score in one of said encapsulating containers;

   the sensing reliability score being a value belonging to a range of values indicating a degree of sensing reliability of a spatial region, wherein the point cloud data is sensed by the sensing device and belongs to the spatial region of the spatial sensing coverage of the sensing device.

2. The method of claim 1, wherein the method further comprises, for each of said at least one spatial region, writing (150), in one of said encapsulating containers, a second data on a presence of a sensing reliability reason data, and wherein if the second data indicates that a sensing reliability reason data is present, writing (160) said sensing reliability reason data in one of said encapsulating containers; the sensing reliability reason data indicating a reason to assign a particular sensing reliability score to a spatial region.

3. The method of parsing point cloud data from encapsulating containers, the method comprising reading (210), from at least one of said encapsulating containers, point cloud data associated with at least one spatial region of a spatial sensing coverage of a sensing device, **characterized in that** the method further comprises for each of said at least one spatial region:

   - reading (220) a first data on a presence of a sensing reliability score from one of said encapsulating containers;
   - if the first data indicates that a sensing reliability score is present, reading (230) said sensing reliability score from one of said encapsulating containers;

   the sensing reliability score being a value belonging to a range of values indicating a degree of sensing reliability of a spatial region, wherein the point cloud data is sensed by the sensing device and belongs to the spatial region of the spatial sensing coverage of the sensing device.

4. The method of claim 3, wherein the method further comprises, for each of said at least one spatial region, reading (240) a second data on a presence of a sensing reliability reason data from one of said encapsulating containers, and wherein if the second data indicates that a sensing reliability reason data is present, reading (250) said sensing reliability reason data from one of said encapsulating containers; the sensing reliability reason data indicating a reason to assign a particular sensing reliability score to a spatial region.

5. The method of one of claims 1 to 4, wherein the first data is a binary value.

6. The method of one of claims 1 to 5, wherein the sensing reliability score is a binary value.

7. The method of one of claims 1 to 5, wherein the sensing reliability score is a value belonging to a range of values.

8. The method of one of claims 2 and 4, wherein the second data is a binary value.

9. The method of one of claims 2 to 8, wherein the sensing reliability reason data relates to one of the following reasons:

   - no sensed data due to sensor failure;
   - bus transmission error;
   - network transmission error;
   - application decision to discard a spatial region;
   - user choice; or
   - erratic sensed data due to sensor failure.

10. The method of one of claims 1 to 9, wherein said encapsulating containers are data structures of a file container.

11. The method of one of claims 1 to 9, wherein said encapsulating containers are network packets.

12. A bitstream of point cloud data encapsulated in encapsulating containers generated by one of the method according to a method of one of claims 1, 2 or 5 to 11.

13. An apparatus comprising means for performing one of the methods claimed in any one of claims 1 to 11.

14. A computer program product including instructions which, when the program is executed by one or more processors, causes the one or more processors to carry out one of the methods claimed in any one of claims 1 to 11.

15. A non-transitory storage medium carrying instructions of program code for executing one of the methods claimed in any one of claims 1 to 11.

**Patentansprüche**

1. Verfahren zum Einkapseln von Punktwolkendaten in Einkapselungsbehältern, wobei das Verfahren das Schreiben (110) von Punktwolkendaten in mindestens einen der Einkapselungsbehälter umfasst, **dadurch gekennzeichnet, dass** das Verfahren ferner für mindestens einen räumlichen Bereich einer räumlichen Erfassungsabdeckung einer Erfassungsvorrichtung umfasst:

    - Schreiben (120) von ersten Daten über das Vorhandensein einer Erfassungszuverlässigkeitsbewertung in einem der Einkapselungsbehälter; und
    - wenn die ersten Daten darauf hindeuten, dass eine Erfassungszuverlässigkeitsbewertung in einem Einkapselungsbehälter vorhanden ist, Schreiben (130) der Erfassungszuverlässigkeitsbewertung in einen der Einkapselungsbehälter;

    wobei die Erfassungszuverlässigkeitsbewertung ein Wert ist, der zu einem Bereich von Werten gehört, der einen Grad der Erfassungszuverlässigkeit eines räumlichen Bereichs angibt, wobei die Punktwolkendaten von der Erfassungsvorrichtung erfasst werden und zu dem räumlichen Bereich der räumlichen Erfassungsabdeckung der Erfassungsvorrichtung gehören.

2. Verfahren nach Anspruch 1, wobei das Verfahren ferner für jeden des mindestens einen räumlichen Bereichs das Schreiben (150), in einem der Einkapselungsbehälter zweiter Daten über das Vorhandensein von Erfassungszuverlässigkeitsdaten umfasst, und wobei, wenn die zweiten Daten anzeigen, dass Erfassungszuverlässigkeitsdaten vorhanden sind, das Schreiben (160) der Erfassungszuverlässigkeitsdaten in einem der Einkapselungsbehälter; die Erfassungszuverlässigkeitsdaten, die einen Grund für die Zuweisung einer bestimmten Erfassungszuverlässigkeitsbewertung zu einem räumlichen Bereich angeben.

3. Verfahren zum Parsen von Punktwolkendaten aus Einkapselungsbehältern, wobei das Verfahren das Lesen (210) von Punktwolkendaten aus mindestens einem der Einkapselungsbehälter umfasst, die mit mindestens einem räumlichen Bereich einer räumlichen Erfassungsabdeckung einer Erfassungsvorrichtung assoziiert sind, **dadurch gekennzeichnet, dass** das Verfahren ferner für jeden der mindestens einen räumlichen Bereiche umfasst:

    - Lesen (220) von ersten Daten über das Vorhandensein einer Erfassungszuverlässigkeitsbewertung aus einem der Einkapselungsbehälter;
    - wenn die ersten Daten darauf hindeuten, dass eine Erfassungszuverlässigkeitsbewertung vorhanden ist, das Ablesen (230) der Erfassungszuverlässigkeitsbewertung von einem der Einkapselungsbehälter;

    wobei die Erfassungszuverlässigkeitsbewertung ein Wert ist, der zu einem Bereich von Werten gehört, der einen Grad der Erfassungszuverlässigkeit eines räumlichen Bereichs angibt, wobei die Punktwolkendaten von der Erfassungsvorrichtung erfasst werden und zu dem räumlichen Bereich der räumlichen Erfassungsabdeckung der Erfassungsvorrichtung gehören.

4. Verfahren nach Anspruch 3, wobei das Verfahren ferner das Lesen (240) von zweiten Daten über das Vorhandensein von Erfassungszuverlässigkeitsdaten aus einem der Einkapselungsbehälter für jeden der mindestens einen räumlichen Bereiche umfasst, und wobei, wenn die zweiten Daten anzeigen, dass Erfassungszuverlässigkeitsdaten vorhanden sind, das Lesen (250) der Erfassungszuverlässigkeitsdaten aus einem der Einkapselungsbehälter; die Erfassungszuverlässigkeitsdaten, die einen Grund für die Zuweisung einer bestimmten Erfassungszuverlässigkeitsbewertung zu einem räumlichen Bereich angeben.

5. Verfahren nach einem der Ansprüche 1 bis 4, wobei die ersten Daten ein Binärwert sind.

**6.** Verfahren nach einem der Ansprüche 1 bis 5, wobei die Erfassungszuverlässigkeitsbewertung ein Binärwert ist.

**7.** Verfahren nach einem der Ansprüche 1 bis 5, wobei die Erfassungszuverlässigkeitsbewertung ein Wert ist, der zu einem Wertebereich gehört.

**8.** Verfahren nach einem der Ansprüche 2 bis 4, wobei die zweiten Daten ein Binärwert sind.

**9.** Verfahren nach einem der Ansprüche 2 bis 8, wobei sich die Erfassungszuverlässigkeitsdaten auf einen der folgenden Gründe beziehen:

- keine erfassten Daten aufgrund eines Sensorausfalls;
- Busübertragungsfehler;
- Netzwerkübertragungsfehler;
- Anwendungsentscheidung zum Verwerfen eines räumlichen Bereichs;
- Benutzerwahl; oder
- unregelmäßig erfasste Daten aufgrund eines Sensorausfalls.

**10.** Verfahren nach einem der Ansprüche 1 bis 9, wobei die Einkapselungsbehälter Datenstrukturen eines Dateibehälters sind.

**11.** Verfahren nach einem der Ansprüche 1 bis 9, wobei die Einkapselungsbehälter Netzwerkpakete sind.

**12.** Bitstream von Punktwolkendaten, die in Einkapselungsbehältern eingekapselt sind, die durch eines der Verfahren nach einem der Ansprüche 1, 2 oder 5 bis 11 erzeugt werden.

**13.** Vorrichtung umfassend Mittel zur Durchführung eines der Verfahren nach einem der Ansprüche 1 bis 11.

**14.** Computerprogrammprodukt, einschließlich Anweisungen, das, wenn das Programm von einem oder mehreren Prozessoren ausgeführt wird, die einen oder mehrere Prozessoren dazu veranlasst, eines der Verfahren nach einem der Ansprüche 1 bis 11 durchzuführen.

**15.** Nicht vorübergehendes Speichermedium, das Anweisungen für den Programmcode zur Ausführung eines der Verfahren nach einem der Ansprüche 1 bis 11 enthält.

**Revendications**

**1.** Procédé d'encapsulation de données de nuage de points dans des contenants d'encapsulation, le procédé comprenant l'écriture (110) de données de nuage de points dans au moins l'un desdits contenants d'encapsulation, **caractérisé en ce que** le procédé comprend en outre pour au moins une région spatiale d'une couverture de détection spatiale d'un dispositif de détection :

- l'écriture (120) d'une première donnée sur une présence d'un score de fiabilité de détection dans l'un desdits contenants d'encapsulation ; et
- si les premières données indiquent qu'un score de fiabilité de détection est présent dans un contenant d'encapsulation, l'écriture (130) dudit score de fiabilité de détection dans l'un desdits contenants d'encapsulation ; le score de fiabilité de détection étant une valeur appartenant à une plage de valeurs indiquant un degré de fiabilité de détection d'une région spatiale, dans lequel les données de nuage de points sont détectées par le dispositif de détection et appartiennent à la région spatiale de la couverture de détection spatiale du dispositif de détection.

**2.** Procédé selon la revendication 1, dans lequel le procédé comprend en outre, pour chacune de ladite au moins une région spatiale, l'écriture (150), dans l'un desdits contenants d'encapsulation, d'une seconde donnée sur une présence d'une donnée de raison de fiabilité de détection, et dans lequel, si les deuxièmes données indiquent qu'une donnée de raison de fiabilité de détection est présente, l'écriture (160) de ladite donnée de raison de fiabilité de détection dans l'un desdits contenants d'encapsulation ; la donnée de raison de fiabilité de détection indiquant une raison d'attribution d'un score de fiabilité de détection particulier à une région spatiale.

**3.** Procédé d'analyse de données de nuage de points à partir de contenants d'encapsulation, le procédé comprenant la lecture (210), à partir d'au moins l'un desdits contenants d'encapsulation, de données de nuage de points associées à au moins une région spatiale d'une couverture de détection spatiale d'un dispositif de détection, **caractérisé en ce que** le procédé comprend en outre pour chacune de ladite au moins une région spatiale :

- la lecture (220) d'une première donnée sur une présence d'un score de fiabilité de détection à partir de l'un desdits contenants d'encapsulation ;
- si la première donnée indique qu'un score de fiabilité de détection est présent, la lecture (230) dudit score de fiabilité de détection à partir de l'un desdits contenants d'encapsulation ;

le score de fiabilité de détection étant une valeur appartenant à une plage de valeurs indiquant un degré de fiabilité de détection d'une région spatiale, dans lequel les données de nuage de points sont détectées par le dispositif de détection et appartiennent à la région spatiale de la couverture de détection spatiale du dispositif de détection.

4. Procédé selon la revendication 3, dans lequel le procédé comprend en outre, pour chacune de ladite au moins une région spatiale, la lecture (240) d'une seconde donnée sur une présence d'une donnée de raison de fiabilité de détection à partir de l'un desdits contenants d'encapsulation, et dans lequel, si la seconde donnée indique qu'une donnée de raison de fiabilité de détection est présente, la lecture (250) de ladite donnée de raison de fiabilité de détection à partir de l'un desdits contenants d'encapsulation ; la donnée de raison de fiabilité de détection indiquant une raison d'attribution d'un score de fiabilité de détection particulier à une région spatiale.

5. Procédé selon l'une des revendications 1 à 4, dans lequel la première donnée est une valeur binaire.

6. Procédé selon l'une des revendications 1 à 5, dans lequel le score de fiabilité de détection est une valeur binaire.

7. Procédé selon l'une des revendications 1 à 5, dans lequel le score de fiabilité de détection est une valeur appartenant à une plage de valeurs.

8. Procédé selon l'une des revendications 2 à 4, dans lequel la seconde donnée est une valeur binaire.

9. Procédé selon l'une des revendications 2 à 8, dans lequel la donnée de raison de fiabilité de détection se rapporte à l'une des raisons suivantes :

    - aucune donnée détectée en raison d'une défaillance de capteur ;
    - une erreur de transmission de bus ;
    - une erreur de transmission de réseau ;
    - une décision d'application pour rejeter une région spatiale ;
    - un choix d'utilisateur ; ou
    - des données détectées irrégulières en raison d'une défaillance de capteur.

10. Procédé selon l'une des revendications 1 à 9, dans lequel lesdits contenants d'encapsulation sont des structures de données d'un contenant de fichiers.

11. Procédé selon l'une des revendications 1 à 9, dans lequel lesdits contenants d'encapsulation sont des paquets de réseau.

12. Flux binaire de données de nuage de points encapsulées dans des contenants d'encapsulation générés par l'un des procédés conformément à un procédé selon l'une des revendications 1, 2 ou 5 à 11.

13. Appareil comprenant des moyens de réalisation de l'un des procédés selon l'une quelconque des revendications 1 à 11.

14. Produit programme informatique comportant des instructions qui, lorsque le programme est exécuté par un ou plusieurs processeurs, amènent les un ou plusieurs processeurs à réaliser l'un des procédés selon l'une quelconque des revendications 1 à 11.

15. Support de stockage non transitoire portant des instructions de code programme pour exécuter l'un des procédés selon l'une quelconque des revendications 1 à 11.

**Fig. 1**

**Fig. 2**

Fig. 3

Fig. 4

**Fig. 5**

ROI

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

Fig. 17

Fig. 18

200

210

PD

EC

220

D1

D1=1?

no

yes

last?

no

yes

230

SRS

**Fig. 19**

200

210

PD

EC

220

D1

D1=1?

no

yes

last?

no

yes

no

240

D2

D2=1?

no

yes

230

SRS

EC

250

D2

**Fig. 20**

```
aligned(8)  class  GPCCSpatialRegionStruct(dimension_included) {
    ...
    unsigned int(1) reliability_score_present_flag;
    unsigned int(4) reserved;
    ...
    if(reliability_score_present_flag) {
        unsigned int(8) reliability_score;
    }
}
```

# Fig. 21

```
aligned(8)  class  GPCCSpatialRegionStruct(dimension_included) {
    ...
    unsigned int(1) reliability_present_flag;
    unsigned int(4) reserved;
    ...
    if(reliability_present_flag) {
        unsigned int(1) reliability;
    }
}
```

# Fig. 22

```
aligned(8)    class    GPCCSpatialRegionStruct(dimension_included)    {
    ...
    unsigned int(1) reliability_score_present_flag;
    unsigned int(4) reserved;
    ...
    if(reliability_score_present_flag) {
        unsigned int(8) reliability_score;
        unsigned          int(1)          reliability_reason_present_flag;
        if(reliability_reason_present_flag)                                   {
            unsigned int(8) reliability_reason;
    }
}
```

# Fig. 23

**Fig. 24**